# EUROPEAN PATENT SPECIFICATION

(11) **EP 4 147 068 B1**
(45) Date of publication and mention of the grant of the patent: **21.10.2026**
(21) Application number: 21799959.8
(22) Date of filing: 15.04.2021
(51) Int. Cl.: G06V 20/58, G06V 20/64, G06V 10/25, G01S 7/48, G01S 17/50, B60W 40/02, G05D 1/00, G01S 17/58, B60W 60/00

(54) **SYSTEMS AND METHODS FOR CONTROLLING VEHICLES USING AN AMODAL CUBOID BASED ALGORITHM**
SYSTEME UND VERFAHREN ZUR STEUERUNG VON FAHRZEUGEN UNTER VERWENDUNG EINES MODALEN ALGORITHMUS AUF WÜRFELBASIS
SYSTÈMES ET PROCÉDÉS POUR LA COMMANDE DE VÉHICULES À L'AIDE D'UN ALGORITHME BASÉ SUR UN CUBOÏDE AMODAL

(30) Priority: 07.05.2020 US 202016868801
(43) Date of publication of application: 15.03.2023
(73) Proprietor: Argo AI, LLC, Pittsburgh, PA 15222 (US)
(72) Inventor: PLAYER, Kevin, James, Pittsburgh, PA 15222 (US)
(74) Representative: Bonsmann, Joachim Bernhard
(86) International application number: PCT/US2021/027384
(87) International publication number: WO 2021/225762

(56) References cited:
- GB-A- 2 537 681
- US-A1- 2010 086 923
- US-A1- 2019 180 467
- US-A1- 2020 117 947
- ANONYMOUS: "Overview Argoverse 1", 1 October 2019 (2019-10-01), Argoverse web site, pages 1 - 10, XP093148701, Retrieved from the Internet <URL:https://www.argoverse.org/av1.html> [retrieved on 20240407]
- MURESAN MIRCEA PAUL ET AL: "Multi-Object Tracking of 3D Cuboids Using Aggregated Features", 2019 IEEE 15TH INTERNATIONAL CONFERENCE ON INTELLIGENT COMPUTER COMMUNICATION AND PROCESSING (ICCP), IEEE, 5 September 2019 (2019-09-05), pages 11 - 18, XP033690114, DOI: 10.1109/ICCP48234.2019.8959552
- HU HOU-NING ET AL: "Joint Monocular 3D Vehicle Detection and Tracking", 2019 IEEE/CVF INTERNATIONAL CONFERENCE ON COMPUTER VISION (ICCV), IEEE, 27 October 2019 (2019-10-27), pages 5389 - 5398, XP033723476, DOI: 10.1109/ICCV.2019.00549
- WEI YAO: "Extraction and velocity estimation of vehicles in urban areas from airborne laserscanning data", DISSERTATION, 29 November 2010 (2010-11-29), pages 1 - 128, XP055870974
- LI LI; LI ZHU; ZAKHARCHENKO VLADYSLAV; CHEN JIANLE; LI HOUQIANG: "Advanced 3D motion prediction for video-based dynamic point cloud compression", IEEE TRANSACTIONS ON IMAGE PROCESSING, vol. 29, 8 August 2019 (2019-08-08), pages 289 - 302, XP011747622, ISSN: 1057-7149, DOI: 10.1109/TIP.2019.2931621
- DARAEI M HOSSEIN; VU ANH; MANDUCHI ROBERTO: "Velocity and shape from tightly-coupled LiDAR and camera", 2017 IEEE INTELLIGENT VEHICLES SYMPOSIUM (IV), 11 June 2017 (2017-06-11), pages 60 - 67, XP033133689, DOI: 10.1109/IVS.2017.7995699

## Description

### BACKGROUND

### Statement of the Technical Field

The present disclosure relates generally to vehicles. More particularly, the present disclosure relates to implementing systems and methods controlling vehicles using an amodal cuboid based algorithm.

### Description of the Related Art

Modern day vehicles have at least one on-board computer and have internet/satellite connectivity. The software running on these on-board computers monitor and/or control operations of the vehicles. The vehicle also comprises LiDAR detectors for detecting objects in proximity thereto. The LiDAR detectors generate LiDAR datasets that measure the distance from the vehicle to an object at a plurality of different times. These distance measurements can be used for tracking movements of the object, making predictions as to the objects trajectory, and planning paths of travel for the vehicle based on the predicted objects trajectory.

In Anonymous: "Overview Argoverse 1", 1 October 2019, page 110, XP093148701, retrieved from the Internet under URL https://www.argoverse.org/avl.html "amodal 3D bounding cuboids" representing the spatial extent of an object in 3D space are mentioned.

### SUMMARY

The present disclosure concerns implementing systems and methods for controlling an autonomous vehicle. The methods comprise: performing operations by the autonomous vehicle to generate a plurality of LiDAR datasets that measure a distance from the autonomous vehicle to an object (e.g., a vehicle) at a plurality of different times; plotting each of the LiDAR datasets on a 3D graph; defining an amodal cuboid on each of the 3D graphs that encompasses all of the LiDAR data points in a respective one of the LiDAR datasets; selecting a plurality of different positions for the amodal cuboid in the 3D graphs; determining coordinates for a center point of the amodal cuboid at the different positions within each of the 3D graphs; using the center point coordinates to compute a plurality of velocity values and a plurality of acceleration values for the object at each of the different times; using the center point coordinates to compute a plurality of single frame score values that are each a function of (i) weighted Euclidean distances of each LiDAR point to an edge of the amodal cuboid in a given position within a respective one of the 3D graphs, (ii) weighted Euclidean distances to the center point of the amodal cuboid in the given position within the respective one of the 3D graphs, and (iii) weighted edges according to a probability of occlusion; using the velocity values, acceleration values and single frame score values to respectively compute a plurality of scores for the different cuboid positions in the 3D graphs; using the plurality of scores as inputs to a Viterbi algorithm for determining a most likely sequence of states for the object given the LiDAR datasets; and using the most likely sequence of states for the object by the autonomous vehicle to facilitate at least one autonomous driving operation (e.g., object movement tracking, object trajectory predicting, vehicle movement/motion planning, and collision avoidance).

In some scenarios, the different positions of the amodal cuboid within each of the 3D graphs are arbitrarily selected. The LiDAR datasets may be processed by an on-board computing device of the autonomous vehicle to determine the most likely sequence of states for the object. Additionally or alternatively, the LiDAR datasets may be processed by a remote computing device. In this case, the methods further comprise providing the plurality of LiDAR datasets to a remote computing device where the most likely sequence of states for the object is determined.

Each velocity value may be a function of (i) a center point coordinate for the amodal cuboid in a given position while encompassing data points of a first LiDAR dataset of the plurality of LiDAR datasets that was acquired at a given time, (ii) a center point coordinate of the amodal cuboid in the given position while encompassing data points of a second LiDAR dataset of the plurality of LiDAR datasets that was acquired at immediately subsequent time, and (iii) a LiDAR frame rate.

Each acceleration value may be a function of (i) a velocity of the object computed using a center point coordinate for the amodal cuboid in a given position while encompassing data points of a first LiDAR dataset of the plurality of LiDAR datasets that was acquired at a given time, (ii) a velocity of the object using a center point coordinate for the amodal cuboid in the given position while encompassing data points of a second LiDAR dataset of the plurality of LiDAR datasets that was acquired at an immediately subsequent time, and (iii) a LiDAR frame rate.

Each single frame score value may be defined by the mathematical equation $SF {S}_{t} = \left|{w}_{j}{L}_{EPC 1 t}\right| + \left|{w}_{k}{L}_{CPC 1 t}\right| ,$ where: ***SFSₜ*** represents a single frame score associated with the amodal cuboid that is in a given position in a given 3D graph so as to encompass a given LiDAR dataset of the plurality of LiDAR datasets that was acquired at time ***t***; ***wⱼ*** and ***wₖ*** represent weights; ***L_{EPC1t}*** represents Euclidean distances of LiDAR data points to an edge of the amodal cuboid in the given position within the given 3D graph; and ***L_{CPC1t}*** represents Euclidean distances of LiDAR data points to a center point of the amodal cuboid in the given position within the given 3D graph.

Each score may be defined by the mathematical equation ${S}_{t} = Max \left\{compatible state_\left\{t-1\right\}\right\} \left(S\left(state_\left\{t-1\right\}\right)+{w}_{m}SF{S}_{t + 1}+{w}_{n}{\left|ν\left[t+1\right]\right|}^{2}+{w}_{o}{\left|a\left[t\right]\right|}^{2}\right)$ where: ***Sₜ*** represents a score associated with a first LiDAR dataset of the LiDAR datasets that was acquired at a given time and that has plotted data points which are encompassed by the amodal cuboid having a given position within a given 3D graph; Max{compatible state_{***t-1***} } represents a maximum value over all states at time ***t-1;*** S(state_{***t-1***}) represents a score computed for a state at ***t-1; wₘ**, **wₙ*** and ***wₒ*** represent weights; ***SFSₜ₊₁*** represents a single frame score previously computed for the amodal cuboid encompassing a second LiDAR dataset of the plurality of LiDAR datasets that was acquired at an immediately subsequent time; **|*v*[*t*+1]|** represents an L2-norm of the velocity values previously computed for the second LiDAR dataset; and **|*a*[*t*]|** represents an L2-norm of the acceleration values previously computed for the first LiDAR dataset.

### BRIEF DESCRIPTION OF THE DRAWINGS

The present solution will be described with reference to the following drawing figures, in which like numerals represent like items throughout the figures.
FIG. 1 is an illustration of an illustrative system.
FIG. 2 is an illustration of an illustrative architecture for a vehicle.
FIG. 3 is an illustration of an illustrative architecture for a LiDAR system employed by the vehicle shown in FIG. 2.
FIG. 4 is an illustration of an illustrative computing device.
FIGS. 5A-5B (collectively referred to herein as "FIG. 5") provides a flow diagram of an illustrative method for controlling an autonomous vehicle using an amodal cuboid based algorithm.
FIGS. 6-13 each provide an illustration that is useful for understanding for understanding the amodal cuboid based algorithm of the present solution.

### DETAILED DESCRIPTION

As used in this document, the singular forms "a," "an," and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to." Definitions for additional terms that are relevant to this document are included at the end of this Detailed Description.

An "electronic device" or a "computing device" refers to a device that includes a processor and memory. Each device may have its own processor and/or memory, or the processor and/or memory may be shared with other devices as in a virtual machine or container arrangement. The memory will contain or receive programming instructions that, when executed by the processor, cause the electronic device to perform one or more operations according to the programming instructions.

The terms "memory," "memory device," "data store," "data storage facility" and the like each refer to a non-transitory device on which computer-readable data, programming instructions or both are stored. Except where specifically stated otherwise, the terms "memory," "memory device," "data store," "data storage facility" and the like are intended to include single device embodiments, embodiments in which multiple memory devices together or collectively store a set of data or instructions, as well as individual sectors within such devices.

The terms "processor" and "processing device" refer to a hardware component of an electronic device that is configured to execute programming instructions. Except where specifically stated otherwise, the singular term "processor" or "processing device" is intended to include both single-processing device embodiments and embodiments in which multiple processing devices together or collectively perform a process.

The term "vehicle" refers to any moving form of conveyance that is capable of carrying either one or more human occupants and/or cargo and is powered by any form of energy. The term "vehicle" includes, but is not limited to, cars, trucks, vans, trains, autonomous vehicles, aircraft, aerial drones and the like. An "autonomous vehicle" is a vehicle having a processor, programming instructions and drivetrain components that are controllable by the processor without requiring a human operator. An autonomous vehicle may be fully autonomous in that it does not require a human operator for most or all driving conditions and functions, or it may be semi-autonomous in that a human operator may be required in certain conditions or for certain operations, or that a human operator may override the vehicle's autonomous system and may take control of the vehicle.

In this document, when terms such as "first" and "second" are used to modify a noun, such use is simply intended to distinguish one item from another, and is not intended to require a sequential order unless specifically stated. In addition, terms of relative position such as "vertical" and "horizontal", or "front" and "rear", when used, are intended to be relative to each other and need not be absolute, and only refer to one possible position of the device associated with those terms depending on the device's orientation.

Real-time prediction of actions by drivers of other vehicles and pedestrians is a challenge for on-road semi-autonomous or autonomous vehicle applications. Such real-time prediction is particularly challenging when the drivers and/or pedestrians break traffic rules. Systematically assuming the worst case action from the drivers and/or pedestrians will paralyze the self-driving vehicle, but erroneously optimistic predictions can result in unsafe autonomous vehicle behavior.

This document describes methods and systems that are directed to addressing the problems described above, and/or other issues. Accordingly, the present solution concerns systems and methods for controlling vehicles using an amodal cuboid based algorithm. The methods generally involve: performing operations by an autonomous vehicle to generate a plurality of LiDAR datasets that measure a distance from the autonomous vehicle to a first object at a plurality of different times; plotting each of the LiDAR datasets on a 3D graph; defining an amodal cuboid on each of the 3D graphs that encompasses all of the LiDAR data points in a respective one of the LiDAR datasets; arbitrarily selecting a plurality of different positions for the amodal cuboid in the 3D graphs; determining coordinates for a center point of the amodal cuboid at the different positions within each of the 3D graphs; using the center point coordinates to compute a plurality of velocity and acceleration values for the object at each of the different times; using the center point coordinates to compute a plurality of single frame score values that are each a function of (i) weighted Euclidean distances of each LiDAR point to an edge of the amodal cuboid in a given position within a respective one of the 3D graphs, (ii) weighted Euclidean distances to the center point of the amodal cuboid in the given position within the respective one of the 3D graphs, and (iii) weighted edges according to a probability of occlusion; using the velocity values, acceleration values and single frame score values to respectively compute a plurality of scores for the different cuboid positions in the 3D graphs; using the plurality of scores as inputs to a Viterbi algorithm for determining a most likely sequence of states for the object given the LiDAR datasets; and using the most likely sequence of states for the object by the autonomous vehicle to facilitate tracking of object movements, predictions of object trajectories, planning of vehicle movement/motion, and/or collision avoidance.

Notably, the present solution is being described herein in the context of an autonomous vehicle. The present solution is not limited to autonomous vehicle applications. The present solution can be used in other applications such as robotic application, radar system application, metric applications, and/or system performance applications.

### Illustrative Systems

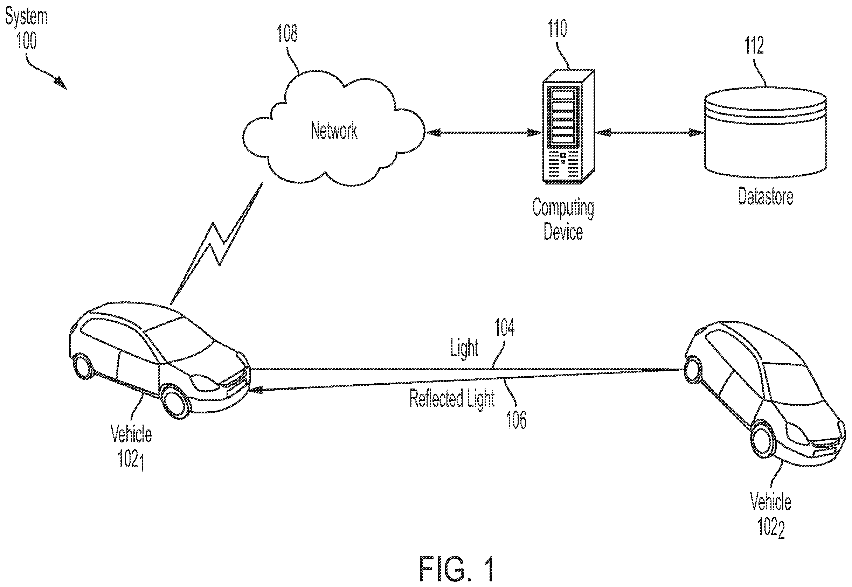

Referring now to FIG. 1, there is provided an illustration of an illustrative system **100.** System **100** comprises a vehicle **102₁** that is traveling along a road in a semi-autonomous or autonomous manner. Vehicle **102₁** is also referred to herein as an Autonomous Vehicle ("AV"). The AV **102₁** can include, but is not limited to, a land vehicle (as shown in FIG. 1), an aircraft, or a watercraft.

AV **102₁** is generally configured to detect objects in proximity thereto. The objects can include, but are not limited to, a vehicle **102₂**, cyclist (not shown) (such as a rider of a bicycle, electric scooter, motorcycle, or the like) and/or a pedestrian (not shown). When such a detection is made, AV **102₁** performs operations to: generate one or more possible object trajectories for the detected object; and analyze at least one of the generated possible object trajectories to determine whether or not there is an undesirable level of risk that a collision will occur between the AV and object in a threshold period of time (e.g., 1 minute). If so, the AV **102₁** performs operations to determine whether the collision can be avoided if a given vehicle trajectory is followed by the AV **102₁** and any one of a plurality of dynamically generated emergency maneuvers is performed in pre-defined time period (e.g., ***N*** milliseconds). If the collision can be avoided, then the AV **102₁** takes no action or optionally performs a cautious maneuver (e.g., mildly slows down). In contrast, if the collision cannot be avoided, then the AV **102₁** immediately takes an emergency maneuver (e.g., brakes and/or changes direction of travel).

Such collision avoidance functions of the AV **102₁** are facilitated using LiDAR datasets generated by an onboard LiDAR detector. The LiDAR detector generally measures the distance to an object **102₂** by illuminating the object **102₂** with light **104** (e.g., a laser light) and measuring the reflected light **106** with an onboard sensor. The LiDAR detector generates a LiDAR dataset at a plurality of times ***t, t+1, t+2,** ..., **t+n.*** The LiDAR datasets are processed by an onboard computing device of the AV **102₁** and/or by a remote computing device **110** to obtain a most likely sequence of states for the object given the LiDAR datasets. In this regard, the LiDAR datasets may be communicated from the AV **102₁** to the remote computing device **110** over a network **108** (e.g., the Internet) via wired and/or wireless connections. The LiDAR datasets may also be stored on a removable memory of the AV **102₁**, which may be manually removed from the AV **102₁** and connected to the remote computing device **110.** The LiDAR datasets may additionally be stored in a remote datastore **112** (e.g., a database).

The most likely sequence of states for the object **102₂** are then used to train a radar based algorithm employed by the autonomous vehicle to more accurately determine the velocity and acceleration of any further detected objects. Thereafter, the AV **102₁** may use the velocity and acceleration values generated by the trained radar based algorithm to facilitate collision avoidance with a greater degree of confidence.

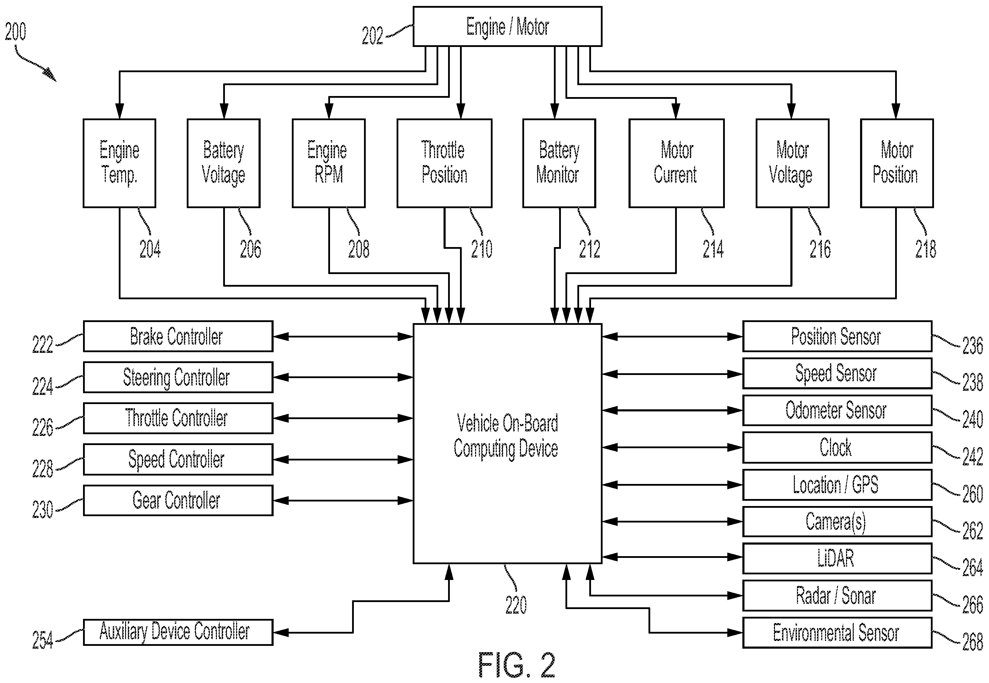

Referring now to FIG. 2, there is provided an illustration of an illustrative system architecture **200** for a vehicle. Vehicles **102₁** and/or **102₂** of FIG. 1 can have the same or similar system architecture as that shown in FIG. 2. Thus, the following discussion of system architecture **200** is sufficient for understanding vehicle(s) **102₁**, **102₂** of FIG. 1.

As shown in FIG. 2, the vehicle **200** includes an engine or motor **202** and various sensors **204-218** for measuring various parameters of the vehicle. In gas-powered or hybrid vehicles having a fuel-powered engine, the sensors may include, for example, an engine temperature sensor **204,** a battery voltage sensor **206,** an engine Rotations Per Minute ("RPM") sensor **208,** and a throttle position sensor **210.** If the vehicle is an electric or hybrid vehicle, then the vehicle may have an electric motor, and accordingly will have sensors such as a battery monitoring system **212** (to measure current, voltage and/or temperature of the battery), motor current **214** and voltage **216** sensors, and motor position sensors such as resolvers and encoders **218.**

Operational parameter sensors that are common to both types of vehicles include, for example: a position sensor **236** such as an accelerometer, gyroscope and/or inertial measurement unit; a speed sensor **238;** and an odometer sensor **240.** The vehicle also may have a clock **242** that the system uses to determine vehicle time during operation. The clock **242** may be encoded into the vehicle on-board computing device, it may be a separate device, or multiple clocks may be available.

The vehicle also will include various sensors that operate to gather information about the environment in which the vehicle is traveling. These sensors may include, for example: a location sensor **260** (e.g., a Global Positioning System ("GPS") device); object detection sensors such as one or more cameras **262;** a LiDAR sensor system **264;** and/or a radar and/or a sonar system **266.** The sensors also may include environmental sensors **268** such as a precipitation sensor and/or ambient temperature sensor. The object detection sensors may enable the vehicle to detect objects that are within a given distance range of the vehicle **200** in any direction, while the environmental sensors collect data about environmental conditions within the vehicle's area of travel.

During operations, information is communicated from the sensors to an on-board computing device **220.** The on-board computing device **220** analyzes the data captured by the sensors and optionally controls operations of the vehicle based on results of the analysis. For example, the on-board computing device **220** may control: braking via a brake controller **232;** direction via a steering controller **224;** speed and acceleration via a throttle controller **226** (in a gas-powered vehicle) or a motor speed controller **228** (such as a current level controller in an electric vehicle); a differential gear controller **230** (in vehicles with transmissions); and/or other controllers.

Geographic location information may be communicated from the location sensor **260** to the on-board computing device **220,** which may then access a map of the environment that corresponds to the location information to determine known fixed features of the environment such as streets, buildings, stop signs and/or stop/go signals. Captured images from the cameras **262** and/or object detection information captured from sensors such as LiDAR **264** is communicated from those sensors) to the on-board computing device **220.** The object detection information and/or captured images are processed by the on-board computing device **220** to detect objects in proximity to the vehicle **200.** Any known or to be known technique for making an object detection based on sensor data and/or captured images can be used in the embodiments disclosed in this document.

When the on-board computing device **220** detects a moving object, the on-board computing device **220** will generate one or more possible object trajectories for the detected object, and analyze the possible object trajectories to assess the risk of a collision between the object and the AV. If the risk exceeds an acceptable threshold, the on-board computing device **220** performs operations to determine whether the collision can be avoided if the AV follows a defined vehicle trajectory and/or implements one or more dynamically generated emergency maneuvers is performed in a pre-defined time period (e.g., ***N*** milliseconds). If the collision can be avoided, then the on-board computing device **220** may cause the vehicle **200** to perform a cautious maneuver (e.g., mildly slow down, accelerate, or swerve). In contrast, if the collision cannot be avoided, then the on-board computing device **220** will cause the vehicle **200** to take an emergency maneuver (e.g., brake and/or change direction of travel).

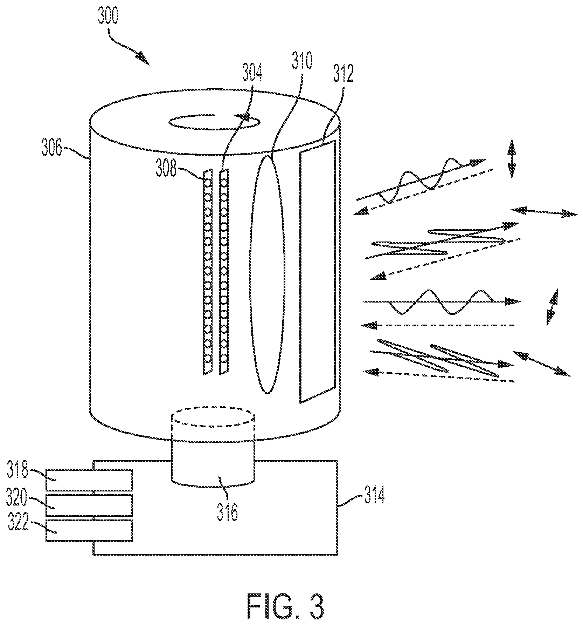

Referring now to FIG. 3, there is provided an illustration of an illustrative LiDAR system **300.** LiDAR system **264** of FIG. 2 may be the same as or substantially similar to the LiDAR system **300.** As such, the discussion of LiDAR system **300** is sufficient for understanding LiDAR system **264** of FIG. 2.

As shown in FIG. 3, the LiDAR system **300** includes a housing **306** which may be rotatable 360° about a central axis such as hub or axle **316.** The housing may include an emitter/receiver aperture **312** made of a material transparent to light. Although a single aperture is shown in FIG. 2, the present solution is not limited in this regard. In other scenarios, multiple apertures for emitting and/or receiving light may be provided. Either way, the LiDAR system **300** can emit light through one or more of the aperture(s) **312** and receive reflected light back toward one or more of the aperture(s) **211** as the housing **306** rotates around the internal components. In an alternative scenarios, the outer shell of housing **306** may be a stationary dome, at least partially made of a material that is transparent to light, with rotatable components inside of the housing **306.**

Inside the rotating shell or stationary dome is a light emitter system **304** that is configured and positioned to generate and emit pulses of light through the aperture **312** or through the transparent dome of the housing **306** via one or more laser emitter chips or other light emitting devices. The emitter system **304** may include any number of individual emitters (e.g., 8 emitters, 64 emitters, or 128 emitters). The emitters may emit light of substantially the same intensity or of varying intensities. The individual beams emitted by the light emitter system **304** will have a well-defined state of polarization that is not the same across the entire array. As an example, some beams may have vertical polarization and other beams may have horizontal polarization. The LiDAR system will also include a light detector **308** containing a photodetector or array of photodetectors positioned and configured to receive light reflected back into the system. The emitter system **304** and light detector **308** would rotate with the rotating shell, or they would rotate inside the stationary dome of the housing **306.** One or more optical element structures **310** may be positioned in front of the light emitting unit **304** and/or the light detector **308** to serve as one or more lenses or waveplates that focus and direct light that is passed through the optical element structure **310.**

One or more optical element structures **310** may be positioned in front of a mirror **312** to focus and direct light that is passed through the optical element structure **310.** As shown below, the system includes an optical element structure **310** positioned in front of the mirror **312** and connected to the rotating elements of the system so that the optical element structure **310** rotates with the mirror **312.** Alternatively or in addition, the optical element structure **310** may include multiple such structures (for example lenses and/or waveplates). Optionally, multiple optical element structures **310** may be arranged in an array on or integral with the shell portion of the housing **306.**

Optionally, each optical element structure **310** may include a beam splitter that separates light that the system receives from light that the system generates. The beam splitter may include, for example, a quarter-wave or half-wave waveplate to perform the separation and ensure that received light is directed to the receiver unit rather than to the emitter system (which could occur without such a waveplate as the emitted light and received light should exhibit the same or similar polarizations).

The LiDAR system will include a power unit **318** to power the light emitting unit **304,** a motor **316,** and electronic components. The LiDAR system will also include an analyzer **314** with elements such as a processor **322** and non-transitory computer-readable memory **320** containing programming instructions that are configured to enable the system to receive data collected by the light detector unit, analyze it to measure characteristics of the light received, and generate information that a connected system can use to make decisions about operating in an environment from which the data was collected. Optionally, the analyzer **314** may be integral with the LiDAR system **300** as shown, or some or all of it may be external to the LiDAR system and communicatively connected to the LiDAR system via a wired or wireless communication network or link.

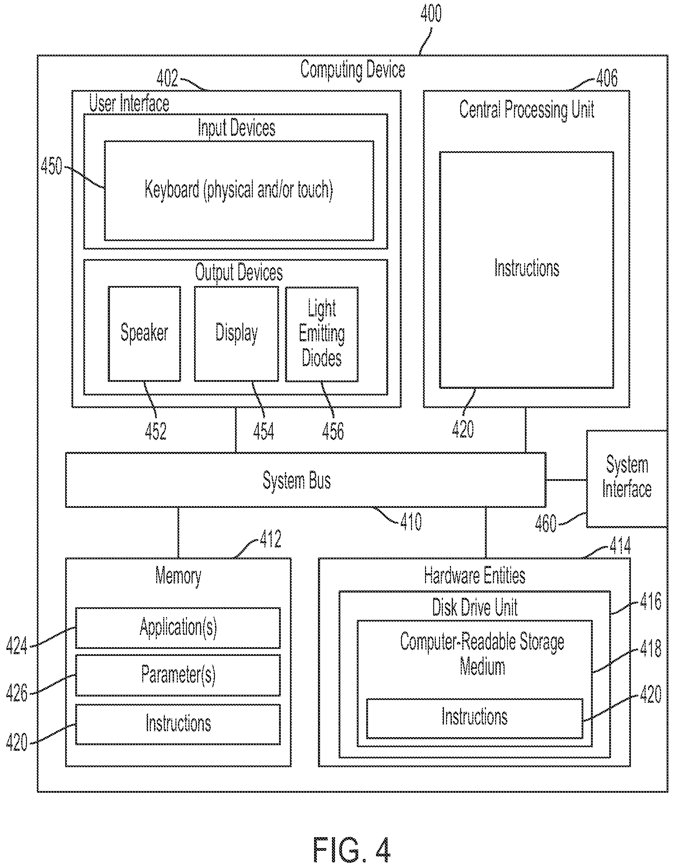

Referring now to FIG. 4, there is provided an illustration of an illustrative architecture for a computing device **400.** The computing device **110** of FIG. 1 and/or the vehicle on-board computing device **220** of FIG. 2 is/are the same as or similar to computing device **300.** As such, the discussion of computing device **300** is sufficient for understanding the computing device **110** of FIG. 1 and the vehicle on-board computing device **220** of FIG. 2.

Computing device **400** may include more or less components than those shown in FIG. 4. However, the components shown are sufficient to disclose an illustrative solution implementing the present solution. The hardware architecture of FIG. 4 represents one implementation of a representative computing device configured to operate a vehicle, as described herein. As such, the computing device **400** of FIG. 4 implements at least a portion of the method(s) described herein.

Some or all components of the computing device **400** can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to and/or programmed to perform one or more of the methodologies, procedures, or functions described herein.

As shown in FIG. 4, the computing device **400** comprises a user interface **402,** a Central Processing Unit ("CPU") **406,** a system bus **410,** a memory **412** connected to and accessible by other portions of computing device **400** through system bus **410,** a system interface **460,** and hardware entities **414** connected to system bus **410.** The user interface can include input devices and output devices, which facilitate user-software interactions for controlling operations of the computing device **400.** The input devices include, but are not limited to, a physical and/or touch keyboard **450.** The input devices can be connected to the computing device **400** via a wired or wireless connection (e.g., a Bluetooth^{®} connection). The output devices include, but are not limited to, a speaker **452,** a display **454,** and/or light emitting diodes **456.** System interface **460** is configured to facilitate wired or wireless communications to and from external devices (e.g., network nodes such as access points, etc.).

At least some of the hardware entities **414** perform actions involving access to and use of memory **412,** which can be a Random Access Memory ("RAM"), a disk drive, flash memory, a Compact Disc Read Only Memory ("CD-ROM") and/or another hardware device that is capable of storing instructions and data. Hardware entities **414** can include a disk drive unit **416** comprising a computer-readable storage medium **418** on which is stored one or more sets of instructions **420** (e.g., software code) configured to implement one or more of the methodologies, procedures, or functions described herein. The instructions **420** can also reside, completely or at least partially, within the memory **412** and/or within the CPU **406** during execution thereof by the computing device **400.** The memory **412** and the CPU **406** also can constitute machine-readable media. The term "machine-readable media", as used here, refers to a single medium or multiple media (e.g., a centralized or distributed database, and/or associated caches and servers) that store the one or more sets of instructions **420.** The term "machine-readable media", as used here, also refers to any medium that is capable of storing, encoding or carrying a set of instructions **420** for execution by the computing device **400** and that cause the computing device **400** to perform any one or more of the methodologies of the present disclosure.

### Illustrative Methods

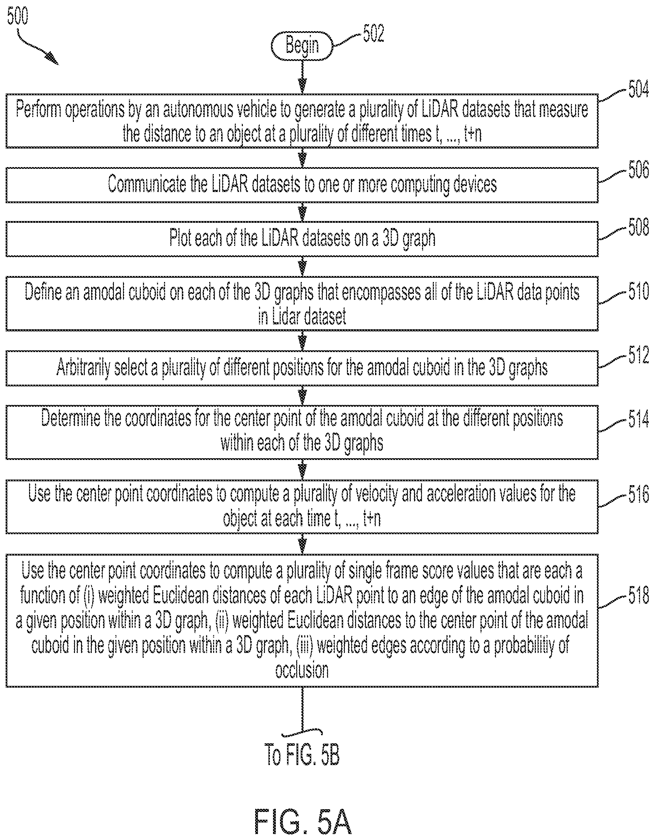

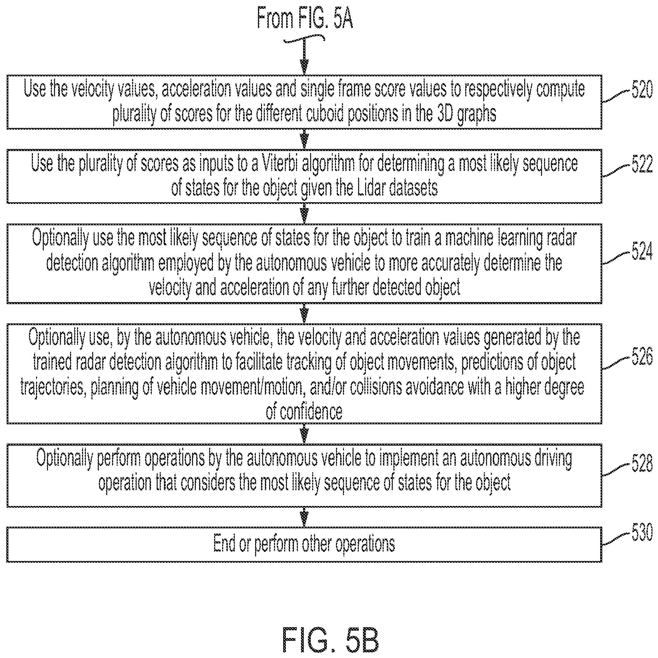

Referring now to FIG. 5, there is provided a flow diagram of an illustrative method **500** for controlling vehicles using an amodal cuboid based algorithm. Method **500** begins with **502** and continues with **504** where an autonomous vehicle (e.g., AV **102₁** of FIG. 1 and/or **200** of FIG. 2) performs operations to generate a plurality of LiDAR datasets that measure a distance from the autonomous vehicle to a first object (e.g., vehicle **102₂** of FIG. 1) at a plurality of different times ***t, t+1, t+2, t+3, ..., t+n.*** The LiDAR datasets are generated by a LiDAR system (e.g., LiDAR system **264** of FIG. 2 and/or **300** of FIG. 3) onboard the autonomous vehicle. Techniques for generating LiDAR datasets are well known in the art, and therefore will not be described here. Any known or to be known technique for generating LiDAR datasets can used here. The LiDAR datasets are then communicated in **506** to one or more computing devices (e.g., remote computing device **110** of FIG. 1 and/or vehicle on-board computing device **220** of FIG. 2).

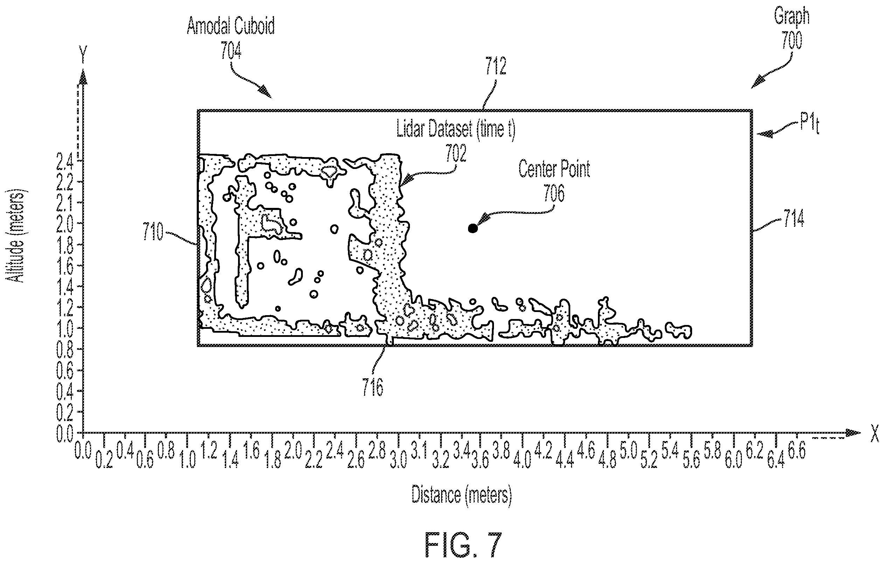

At the computing device, the LiDAR datasets are each plotted on a 3D graph having an x-axis, a y-axis and a z-axis. An illustration of a LiDAR dataset **702** plotted on a graph **700** is provided in FIG. 7. Notably, the graph **700** only shows the 2D point of view from the x-axis and y-axis simply for ease of illustration. Techniques for plotting LiDAR datasets on 3D graphs are well known in the art, and therefore will not be described here. Any known or to be known technique for plotting LiDAR datasets on 3D graphs can be used here.

Next in **510,** an amodal cuboid is defined on each of the 3D graphs. An amodal cuboid is a 3D oriented bounded box that represents (i) a heading of the object (e.g., object **102₂** of FIG. 1) and (ii) the full extent of the object (e.g., object **102₂** of FIG. 1). In this regard, the amodal cuboid encompasses all of the LiDAR data points on the 3D graph. An illustration showing an illustrative amodal cuboid **704** defined on a graph **700** is provided in FIG. 7. As shown in FIG. 7, all of the data points of a LiDAR dataset **702** reside within the amodal cuboid **704.** The present solution is not limited to the particulars of this illustration. Techniques for defining a cuboid on a 3D graph are well known in the art, and therefore will not be described here. Any known or to be known technique for defining a cuboid on a 3D graph can be used herein.

Next in **512,** operations are performed to arbitrarily select a plurality of different positions for the amodal cuboid in the 3D graphs. Any number of different positions can be selected in accordance with a given application. Notably, the only restriction on this selection operation is that all of the data points of the LiDAR dataset must be contained in the amodal cuboid at any given selected position in the 3D graph.

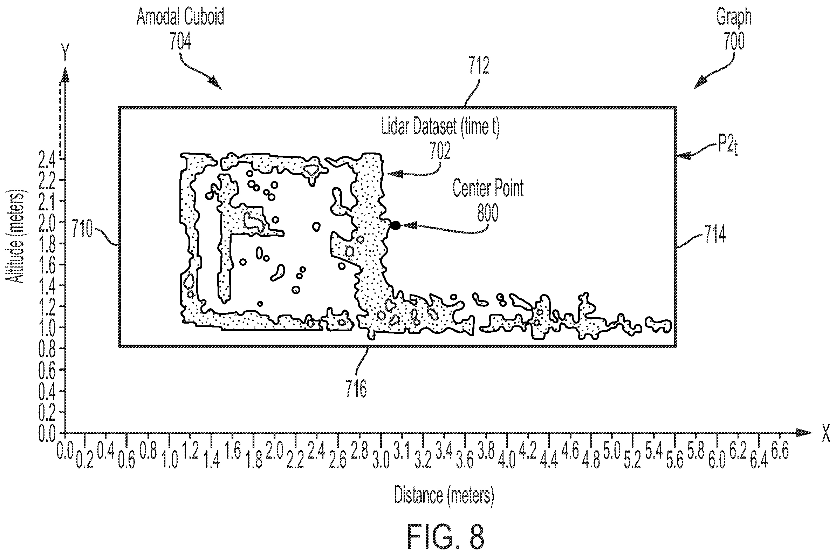

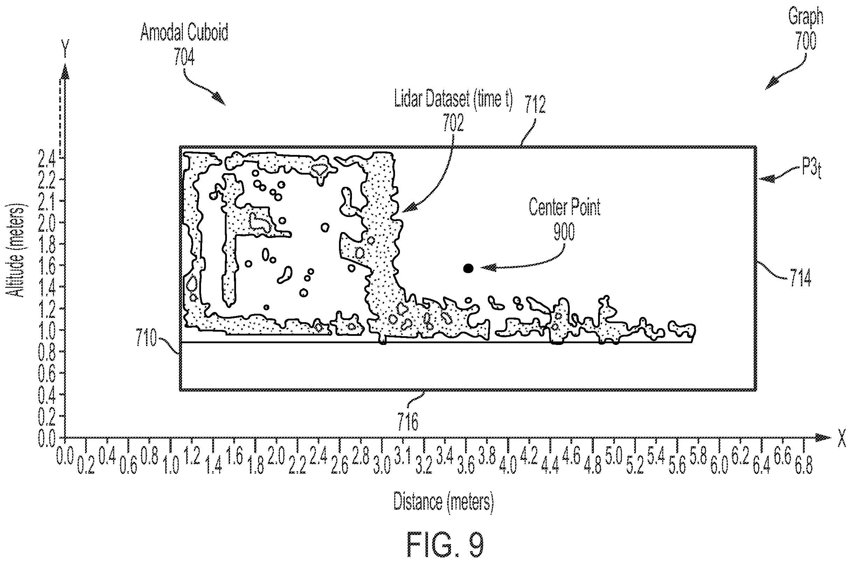

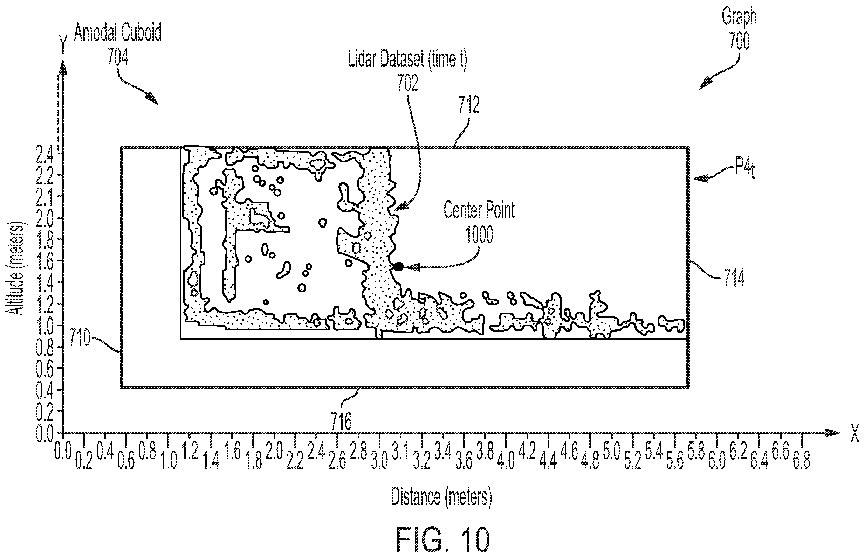

Illustrations showing the amodal cuboid **704** at different positions **P1ₜ, P2ₜ, P3ₜ, P4ₜ** in the graph **700** are provided in FIGS. 7-10. It should be noted that at least one edge of the amodal cuboid touches or is otherwise in contact with data points of the LiDAR dataset **702** at each position **P1ₜ, P2ₜ, P3ₜ, P4ₜ.** For example, a left edge **710** and a bottom edge **716** of the amodal cuboid **704** are aligned or in contact with data points of the LiDAR dataset **702** when the amodal cuboid **704** is in a first position **P1ₜ,** as shown in FIG. 7. A right edge **714** and the bottom edge **716** of the amodal cuboid **704** are aligned or in contact with data points of the LiDAR dataset **702** when the amodal cuboid **704** is in a second position **P2t,** as shown in FIG. 8. The left edge **710** and a top edge **712** of the amodal cuboid **704** are aligned or in contact with data points of the LiDAR dataset **702** when the amodal cuboid **704** is in a third position **P3t,** as shown in FIG. 9. The top edge **712** and the right edge **714** of the amodal cuboid **704** are aligned or in contact with data points of the LiDAR dataset **702** when the amodal cuboid **704** is in a fourth position **P4ₜ**, as shown in FIG. 10. The present solution is not limited to the particulars of this example.

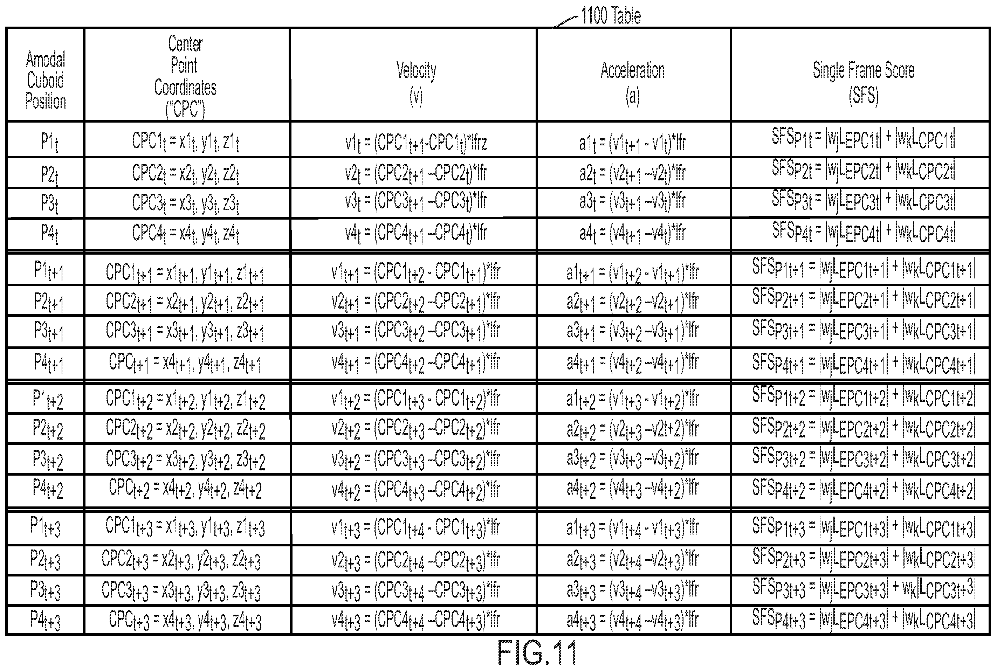

Referring again to FIG. 5, method **500** continues with **514** where coordinates for the center point of the amodal cuboid is determined at the different positions within each of the 3D graphs. For example, a LiDAR dataset **702** was acquired at time **t,** and plotted on a graph **700** as shown in FIG. 7. An amodal cuboid **704** was then defined in the graph **700.** Four different positions **P1ₜ, P2ₜ, P3ₜ, P4ₜ** for the amodal cuboid **704** in the graph **700** were arbitrarily selected as shown in FIGS. 7-10. Thus, the amodal cuboid **704** has the following four corresponding center points: a first center point **706** while in the first position **P1ₜ** shown in FIG. 7; a second center point **800** while in a second position **P2ₜ** shown in FIG. 8; a third center point **900** while in a third position **P3ₜ** shown in FIG. 9; and a fourth center point **1000** while in a fourth position **P4ₜ** shown in FIG. 10. As shown in Table **1100** of FIG. 11, the coordinates for the center point **706** while the amodal cuboid **704** is in the first position **P1ₜ** are expressed by the following mathematical equation (1). The coordinates for the center point **800** while the amodal cuboid **704** is in the second position **P2ₜ** are expressed by the following mathematical equation (2). The coordinates for the center point **900** while the amodal cuboid **704** is in the third position **P3ₜ** are expressed by the following mathematical equation (3). The coordinates for the center point **1000** while the amodal cuboid **704** is in the fourth position **P4ₜ** are expressed by the following mathematical equation (4). $CPC {1}_{t} = x {1}_{t} , y {1}_{t} , z {1}_{t}$ (1) $CPC {2}_{t} = x {2}_{t} , y {2}_{t} , z {2}_{t}$ (2) $CPC {3}_{t} = x {3}_{t} , y {3}_{t} , z {3}_{t}$ (3) $CPC {4}_{t} = x {4}_{t} , y {4}_{t} , z {4}_{t}$ (4) where ***CPC1ₜ**, **CPC2ₜ**, **CPC3ₜ**, **CPC4ₜ*** each represent a center point coordinate for the amodal cuboid encompassing data points of a LiDAR dataset acquired at time ***t**. **x1ₜ**, **x2ₜ**, **x3ₜ**, **x4ₜ*** each represent an x-axis coordinate of a center point for an amodal cuboid encompassing data points of a LiDAR dataset acquired at time ***t**. **y1ₜ**, **y2ₜ**, **y3ₜ**, **y4ₜ*** each represent a y-axis coordinate of a center point for an amodal cuboid encompassing data points of a LiDAR dataset acquired at time ***t. z1ₜ**, **z2ₜ**, **z3ₜ**, **z4ₜ*** each represent a z-axis coordinate for a center point for an amodal cuboid encompassing data points of a LiDAR dataset acquired at time ***t*.** FIG. 11 also shows other amodal cuboid center point coordinates for the LiDAR datasets acquired at times ***t+1, t+2,*** and ***t+3.***

In next **516,** the center point coordinates are used to compute a plurality of velocity and acceleration values for the object (e.g., vehicle **102₂** of FIG. 1) at each time t, ***t+1**, **t+2**, ..., **t+n.*** The velocity is a function of (i) a center point coordinate (e.g., ***CPC1ₜ***) for the amodal cuboid in a given position (e.g., **P1ₜ**) while encompassing data points of a LiDAR dataset acquired at a given time (e.g., ***t***), (ii) a center point coordinate (e.g., ***CPC1*_{*t+*1}**) of the amodal cuboid in the same given position (e.g., **P1ₜ**) while encompassing data points of a LiDAR dataset acquired at immediately subsequent time (e.g., ***t+1***), and (iii) a LiDAR frame rate (***lfr***). The velocity is generally defined by the following mathematical equation (4). ${ν}_{t} = \left(CP{C}_{t + 1}-CP{C}_{t}\right) * lfr$ (4) The acceleration is a function of (i) a velocity of an object computed using a center point coordinate (e.g., ***CPC1ₜ***) for the amodal cuboid in a given position (e.g., **P1ₜ**) while encompassing data points of a LiDAR dataset acquired at a given time (e.g., ***t***)*,* (ii) a velocity of the object using a center point coordinate (e.g., ***CPC1**_{**t**+**1**}*) for the amodal cuboid in the same given position (e.g., **P1ₜ**) while encompassing data points of a LiDAR dataset acquired at an immediately subsequent time (e.g., ***t+1***), and (iii) the LiDAR frame rate (*"**lfr**"*). The acceleration is generally defined by the following mathematical equation (5). ${a}_{t} = \left({ν}_{t + 1}-{ν}_{t}\right) * lfr$ (5) FIG. 11 shows the velocity and acceleration equations for the plurality of positions **P1, P2, P3** and **P4** of the amodal cuboid **704** in graph **700** while encompassing data points of a LiDAR dataset acquired at a ***t, t+1, t+2,*** and ***t+3.***

Subsequently in **518,** the center point coordinates are also used to compute a plurality of Single Frame Score ("**S*FS***") values. Each ***SFS*** value is a function of (i) weighted Euclidean distances of each LiDAR point to an edge of the amodal cuboid in a given position within a 3D graph, (ii) weighted Euclidean distances to the center point of the amodal cuboid in the given position within a 3D graph, (iii) weighted edges according to a probability of occlusion. Techniques for computing Euclidean distances are well known in the art, and therefore will not be described herein. For example, an L²norm operation can be performed to determine a Euclidean distance of a LiDAR point to an edge or a center point of the amodal cuboid in a given position within a 3D graph. The weights used to determine the weighted Euclidean distances of (i) are hyper parameters selected for prioritizing the four edges of the amodal cuboid. The weights used to determine the weighted Euclidean distances of (ii) are hyper parameters selected for prioritizing the center points of the amodal cuboid. The weights of (iii) are hyper parameters selected to account for a likelihood that an edge of the amodal cuboid is being occluded by the object's body. The ***SFS*** can be generally defined by the following mathematical equation (6). $SF {S}_{t} = \left|{w}_{j}{L}_{EPC 1 t}\right| + \left|{w}_{k}{L}_{CPC 1 t}\right|$ (6) where ***SFSₜ*** represents a single frame score associated with an amodal cuboid that is in a given position in a 3D graph so as to encompass a LiDAR dataset that was acquired at time ***t. wⱼ*** and ***wₖ*** represent weights. ***L_{EPC1t}*** represents the Euclidean distances of LiDAR data points to an edge of the amodal cuboid in a given position within the 3D graph. ***L_{CPC1t}*** represents Euclidean distances of LiDAR data points to the center point of the amodal cuboid in the given position within the 3D graph. In Table **1100** of FIG. 11, ***SFS*** equations are shown for an amodal cuboid while in positions **P1, P2, P3, P4** in 3D graphs so as to encompass LiDAR datasets that were acquired at times ***t, t+1, t+2,*** and ***t+3.***

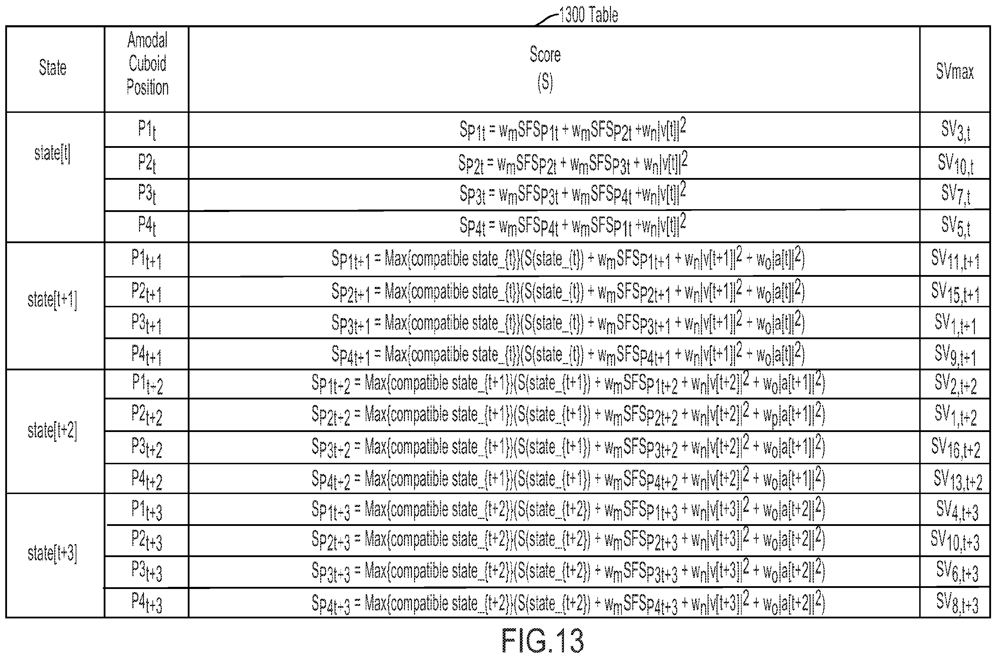

In **520** of FIG. 5, the velocity values, acceleration values and single frame score values are used to respectively compute a plurality of scores for the different cuboid positions in the 3D graphs. The score ("***S***") may be generally defined by the following mathematical equation (7). ${S}_{t} = Max \left\{compatible state_\left\{t-1\right\}\right\} \left(S\left(state_\left\{t-1\right\}\right)+{w}_{m}SF{S}_{t + 1}+{w}_{n}{\left|ν\left[t+1\right]\right|}^{2}+{w}_{o}{\left|a\left[t\right]\right|}^{2}\right)$ (7) where ***Sₜ*** represents a score associated with a LiDAR dataset that was acquired at a given time and that has plotted data points which are encompassed by an amodal cuboid having a given position within a 3D graph. Max{ compatible state_{***t-1***}}represents a maximum value over all states at time ***t-1**. **S***(state_{***t*-1**}) represents a score computed for a state at ***t-1. wₘ**, **wₙ*** and ***wₒ*** represent weights in the form of hyper parameters. ***SFSₜ₊₁*** represents a single frame score previously computed for an amodal cuboid encompassing a LiDAR dataset acquired at time ***t+1.*** |***v*[*t+1*]**| represents an L2-norm of the velocity values previously computed for a LiDAR dataset acquired at time ***t+1.*** |***a***[***t***]| represents an L2-norm of the acceleration values previously computed for a LiDAR dataset acquired at time ***t***. Table **1300** of FIG. 13 shows score equations for scenarios where an amodal cuboid is in positions **P1, P2, P3, P4** within 3D graphs so as to encompass data points of LiDAR datasets acquired at times ***t, t+1, t+2*** and***t+3**.*

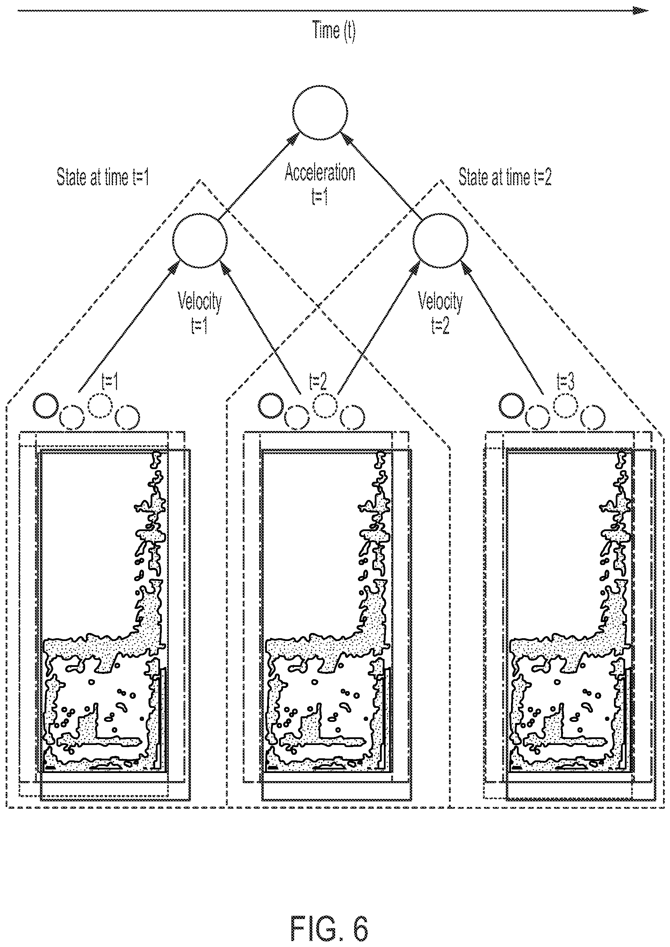

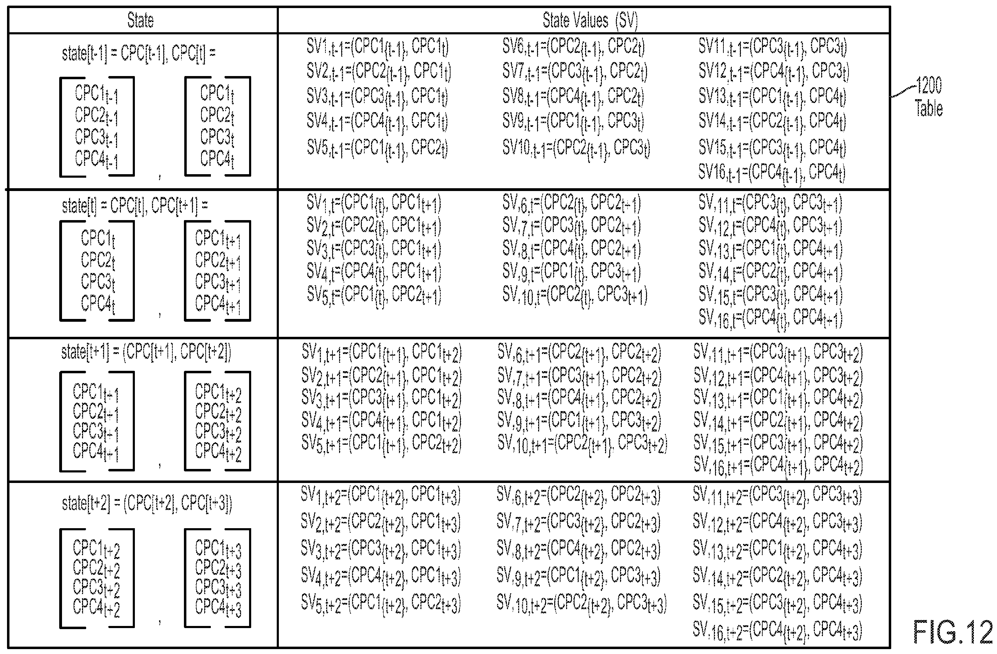

In **522** of FIG. 5, the scores are used as inputs to a Viterbi algorithm and/or other algorithm (e.g., a Brute force algorithm) for determining a most likely sequence of states for the object given the LiDAR datasets. The Viterbi algorithm and Brute force algorithm are well known in the art, and therefore will not be described in detail here. Still, it should be generally noted that the Viterbi algorithm is a dynamic programming algorithm for finding a most likely sequence of hidden states that results in a sequence of observed events. Generally, in the scenario shown in FIGS. 6-13, the Viterbi algorithm involves: finding a score ***S*** at time ***t***=2 by looking at each of the previous 16 scores and adding to each of the 16 scores a weighted time ***t***=1 acceleration magnitude, a time ***t***=2 velocity magnitude, and a ***t**=3* single frame score; finding a best choice of state by recording at each time a maximum score and a previous state that maximized the score; reading backwards from an end to find a best set of states. Table **1200** of FIG. 12 show illustrative mathematical expressions for the 16 possible states at each time ***t-1, t, t+1*** and ***t+2.***

An illustrative pseudo-code for a Viterbi algorithm employed by the present solution is provided below. The inputs to the Viterbi algorithm are: the observation space ***O** =* {***S_{P1t}**, **S_{P2t}**, **S_{P3t}**, **S_{P4t}**, **S_{P1t+1}**, **S_{P2t+1}**, **S_{P3t+1}**, **S_{P4t+1}**, **S_{P1t+2}**, **S_{P2t+2}**, **S_{P3t+2}**, **S_{P4t+2}**, **S_{P1t+3}**, **S_{P2t+3}**, **S_{P3t+3}**, **S_{P4t+3}***}*;* the state space = {***SV_{1,t-1}**, **SV_{2,t-1}**, ..., **SV_{16,t-1}**, **SV_{1,t}**, **SV_{2,t}**, . . ., **SV_{16,t}**, **SV_{1,t+1}**, **SV_{2,t+1},** . . ., **SV_{16,t+1}**, **SV_{1,t+2}**, **SV_{2,t+2}**,* . . ., ***SV_{16,t+2}***}; an array of initial probabilities ***P*** = (***p₁**, **p₂**,* . . ., ***p_{R}***); a sequence of observations ***OB** =* (***ob₁**, **ob₂**,* ..., ***obᵣ***); a transition matrix ***A*** of ***R*** x ***R*;** and an emission matrix ***B*** of ***R*** x ***R.*** 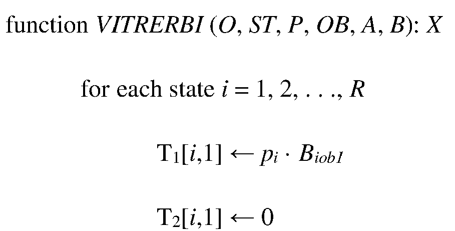 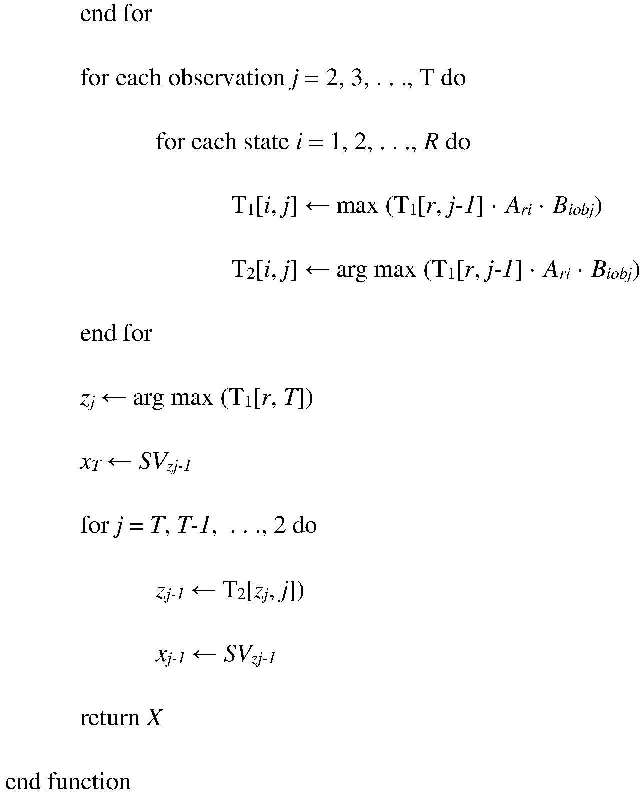 The present solution is not limited to the particulars of the above pseudo-code.

The most likely sequence of states for the object can be used to control various autonomous driving operations of the AV. Accordingly, method **500** includes optional operations **524-528** for this purpose. In optional **524,** the most likely sequence of states for the object is used to train a machine learning radar detection algorithm employed by a radar system (e.g., radar system **266** of FIG. 2) of the autonomous vehicle (e.g., AV **102₁** of FIG. 1) to more accurately determine the velocity and acceleration of any further detected object. Machine learning radar detection algorithms are well known in the art, and therefore will not be described here. Any known or to be known machine learning radar detection algorithm can be used here.

In optional **526,** the autonomous vehicle (e.g., AV **102₁** of FIG. 1) uses the velocity and acceleration values generated by the trained radar detection algorithm to facilitate tracking of object movements, predictions of object trajectories, planning of vehicle movement/motion, and/or collision avoidance with a higher degree of confidence. Methods for object movement tracking, object trajectory predicting, vehicle movement/motion planning, and collision avoidance are well known in the art, and therefore will not be described here. Any known or to be known method for object movement tracking, object trajectory predicting, vehicle movement/motion planning, and collision avoidance can be used here.

In optional **528,** the autonomous vehicle performs operations to implement an autonomous driving operation that considers the most likely sequence of states for the object. The autonomous driving operation can include, but is not limited to, object movement tracking, object trajectory predicting, vehicle movement/motion planning, and collision avoidance. For example, in some scenarios, 528 can involve performing the following operations by the vehicle on-board computing device (e.g., device **220** of FIG. 2): determining a vehicle trajectory for the vehicle that is in motion; detecting an object within a given distance from the vehicle (e.g., using radar or LiDAR data); generating at least one possible object trajectory for the object which was detected using the most likely sequence of states for the object; using the vehicle trajectory and at least one possible object trajectory to determine whether there is an undesirable level of risk that a collision will occur between the vehicle and the object; modifying the vehicle trajectory when a determination is made that there is an undesirable level of risk that the collision will occur; and causing the vehicle to move according to the modified vehicle trajectory. The present solution is not limited to the particulars of this example. Subsequently, **530** is performed, where method **500** ends or other operations are performed.

The above described amodal cuboid based approach can be used in a plurality of different applications. In a first scenario, a manually labled cuboid in the distance surrounds a small cluster of LiDAR returns. The correct amodal cuboid should shift around these LiDAR points. For example, a bus is in a lane but forwards in the distance will have only LiDAR returns on the rear of the bus. It is amodally correct to fit the cuboid with LiDAR on the rear of the bus rather than on the front of the bus.

In a second scenario, a manually label cuboid is partially occluded by another object, or may in fact be in the LiDAR shadow of another object. The dynamics come into play here, and try to minimize acceleration meaning that the algorithm tries to interpolate through shadows and perform a balanced interpolation through partial shadows.

In a third scenario, a cuboid near the LiDAR source will have many returns that speak for the extent of the amodal cuboid. A length, width and height of the object may be determined when the object is near or otherwise in proximity to the AV. This information may be translated across all other frames of LiDAR data.

Although the present solution has been illustrated and described with respect to one or more implementations, equivalent alterations and modifications will occur to others skilled in the art upon the reading and understanding of this specification and the annexed drawings. In addition, while a particular feature of the present solution may have been disclosed with respect to only one of several implementations, such feature may be combined with one or more other features of the other implementations as may be desired and advantageous for any given or particular application. Thus, the breadth and scope of the present solution should not be limited by any of the above described embodiments. Rather, the scope of the present solution should be defined in accordance with the following claims.

## Claims

1. A computer-implemented method for controlling an autonomous vehicle, comprising:
(a) performing operations by the autonomous vehicle to generate a plurality of LiDAR datasets that measure a distance from the autonomous vehicle to an object at a plurality of different times;
(b) plotting each of the LiDAR datasets on a 3D graph;
(c) defining an amodal cuboid on the 3D graph that encompasses all of the LiDAR data points in a respective one of the LiDAR datasets, wherein the amodal cuboid is a 3D oriented bounded box that represents a heading of the object and the full extent of the object;
(d) arbitrarily selecting a plurality of different positions for the amodal cuboid in the 3D graph, wherein the amodal cuboid at the different positions still encompass all of the LiDAR data points in a respective one of the LiDAR datasets;
(e) determining coordinates for a center point of the amodal cuboid at the different positions within the 3D graph;
(f) using the center point coordinates to compute a plurality of velocity values and a plurality of acceleration values for the object at each of the different times;
(g) using the center point coordinates to compute a plurality of single frame score values that are each a function of (i) weighted Euclidean distances of each LiDAR point to an edge of the amodal cuboid in a given position within the 3D graph, and (ii) weighted Euclidean distances to the center point of the amodal cuboid in the given position within the 3D graph;
(h) computing a plurality of scores for the different cuboid positions in the 3D graph based on the velocity values, acceleration values and single frame score values;
(i) using the plurality of scores as inputs to a Viterbi algorithm for determining a most likely sequence of states for the object given the LiDAR datasets; and
(j) using the most likely sequence of states for the object by the autonomous vehicle to facilitate at least one autonomous driving operation.

2. The computer-implemented method according to claim l, wherein the object is a vehicle.

3. The computer-implemented method according to claim l, wherein the at least one autonomous driving operation comprises object movement tracking, object trajectory predicting, vehicle movement/motion planning, and collision avoidance.

4. The computer-implemented method according to claim l, wherein the LiDAR datasets are processed by an on-board computing device of the autonomous vehicle to determine the most likely sequence of states for the object.

5. The computer-implemented method according to claim l, further comprising providing the plurality of LiDAR datasets to a remote computing device where the most likely sequence of states for the object is determined.

6. The computer-implemented method according to claim l, wherein each velocity value of the plurality of velocity values is a function of (i) a center point coordinate for the amodal cuboid in a given position while encompassing data points of a first LiDAR dataset of the plurality of LiDAR datasets that was acquired at a given time, (ii) a center point coordinate of the amodal cuboid in the given position while encompassing data points of a second LiDAR dataset of the plurality of LiDAR datasets that was acquired at immediately subsequent time, and (iii) a LiDAR frame rate.

7. The computer-implemented method according to claim l, wherein each acceleration value of the plurality of acceleration values is a function of (i) a velocity of the object computed using a center point coordinate for the amodal cuboid in a given position while encompassing data points of a first LiDAR dataset of the plurality of LiDAR datasets that was acquired at a given time, (ii) a velocity of the object using a center point coordinate for the amodal cuboid in the given position while encompassing data points of a second LiDAR dataset of the plurality of LiDAR datasets that was acquired at an immediately subsequent time, and (iii) a LiDAR frame rate.

8. The computer-implemented method according to claim 1, wherein each single frame score value of the plurality of single frame score values is defined by mathematical equation $SF {S}_{t} = \left|{w}_{j}{L}_{EPC 1 t}\right| + \left|{w}_{k}{L}_{CPC 1 t}\right| ,$ where: ***SFSₜ*** represents a single frame score associated with the amodal cuboid that is in a given position in a given 3D graph so as to encompass a given LiDAR dataset of the plurality of LiDAR datasets that was acquired at time ***t***; ***wⱼ*** and ***wₖ*** represent weights; ***L_{EPC1t}*** represents Euclidean distances of LiDAR data points to an edge of the amodal cuboid in the given position within the given 3D graph; and ***L_{CPC1t}*** represents Euclidean distances of LiDAR data points to a center point of the amodal cuboid in the given position within the given 3D graph.

9. The computer-implemented method according to claim 1, wherein each score of the plurality of scores is defined by mathematical equation ${S}_{t} = Max \left\{compatible state_\left\{t-1\right\}\right\} \left(\begin{matrix}S \left(state_\left\{t-1\right\}\right) + {w}_{m} SF {S}_{t + 1} + \\ {w}_{n} {\left|ν\left[t+1\right]\right|}^{2} + {w}_{o} {\left|a\left[t\right]\right|}^{2}\end{matrix}\right)$ where: ***Sₜ*** represents a score associated with a first LiDAR dataset of the LiDAR datasets that was acquired at a given time and that has plotted data points which are encompassed by the amodal cuboid having a given position within a given 3D graph; Max{ compatible *state_*{***t-1***}} represents a maximum value over all states at time ***t-1**; **S***(*state_*{***t-1***}) represents a score computed for a state at ***t-1**; **wₘ**, **wₙ*** and ***wₒ*** represent weights; ***SFSₜ₊₁*** represents a single frame score previously computed for the amodal cuboid encompassing a second LiDAR dataset of the plurality of LiDAR datasets that was acquired at an immediately subsequent time; |***v***[***t+1***]| represents an L2-norm of the velocity values previously computed for the second LiDAR dataset; and |***a***[***t***]| represents an L2-norm of the acceleration values previously computed for the first LiDAR dataset.

10. A system comprising means for performing steps of any of the above method claims.

11. A computer program, or a storage medium storing the computer program, comprising instructions that, when executed by a processor, will cause the processor to perform the steps of any of the above method claims.

12. A system comprising:
a LiDAR system configured to generate a plurality of LiDAR datasets that measure a distance from an autonomous vehicle to an object at a plurality of different times;
a processor configured to obtain the plurality of LiDAR datasets; and
a non-transitory computer-readable storage medium comprising programming instructions that are configured to cause the processor to implement a method for controlling an autonomous vehicle according to one of claims 1 to 9.

## Patentansprüche

1. Ein computerimplementiertes Verfahren zur Steuerung eines autonomen Fahrzeugs, umfassend:
(a) Durchführung von Operationen durch das autonome Fahrzeug zur Erzeugung einer Vielzahl von LiDAR-Datensätzen, die den Abstand zwischen dem autonomen Fahrzeug und einem Objekt zu einer Vielzahl unterschiedlicher Zeitpunkte messen;
(b) Darstellung der einzelnen LiDAR-Datensätze in einem 3D-Diagramm;
(c) Definition eines amodalen Quaders auf dem 3D-Graphen, der alle LiDAR-Datenpunkte in einem der LiDAR-Datensätze umfasst, wobei der amodale Quader ein 3D-orientierter begrenzter Kasten ist, der eine Richtung des Objekts und die volle Ausdehnung des Objekts darstellt;
(d) willkürliche Auswahl einer Vielzahl unterschiedlicher Positionen für den amodalen Quader im 3D-Diagramm, wobei der amodale Quader an den verschiedenen Positionen immer noch alle LiDAR-Datenpunkte in einem der jeweiligen LiDAR-Datensätze umfasst;
(e) Bestimmung der Koordinaten für einen Mittelpunkt des amodalen Quaders an den verschiedenen Positionen innerhalb des 3D-Diagramms;
(f) unter Verwendung der Mittelpunktskoordinaten zur Berechnung einer Vielzahl von Geschwindigkeitswerten und einer Vielzahl von Beschleunigungswerten für das Objekt zu jedem der verschiedenen Zeitpunkte;
(g) unter Verwendung der Mittelpunktskoordinaten zur Berechnung einer Vielzahl von Einzelbild-Score-Werten, die jeweils eine Funktion von (i) gewichteten euklidischen Abständen jedes LiDAR- Punktes zu einer Kante des amodalen Quaders an einer gegebenen Position innerhalb des 3D-Graphen und (ii) gewichteten euklidischen Abständen zum Mittelpunkt des amodalen Quaders an der gegebenen Position innerhalb des 3D-Graphen sind;
(h) Berechnung einer Vielzahl von Werten für die verschiedenen Quaderpositionen im 3D-Diagramm auf der Grundlage der Geschwindigkeitswerte, Beschleunigungswerte und Einzelbild-Werte;
(i) Verwendung der Vielzahl von Werten als Eingaben für einen Viterbi-Algorithmus zur Bestimmung einer wahrscheinlichsten Zustandssequenz für das Objekt unter Berücksichtigung der LiDAR-Datensätze; und
(j) Verwendung der wahrscheinlichsten Zustandsfolge des Objekts durch das autonome Fahrzeug, um mindestens einen autonomen Fahrvorgang zu ermöglichen.

2. Das computerimplementierte Verfahren nach Anspruch 1, wobei es sich bei dem Objekt um ein Fahrzeug handelt.

3. Das computerimplementierte Verfahren nach Anspruch l, wobei die mindestens eine autonome Fahroperation die Verfolgung der Objektbewegung, die Vorhersage der Objekttrajektorie, die Fahrzeugbewegungs-/Bewegungsplanung und die Kollisionsvermeidung umfasst.

4. Das computerimplementierte Verfahren nach Anspruch 1, wobei die LiDAR-Datensätze von einem Bordrechner des autonomen Fahrzeugs verarbeitet werden, um die wahrscheinlichste Zustandsfolge für das Objekt zu ermitteln.

5. Das computerimplementierte Verfahren nach Anspruch 1, ferner umfassend das Bereitstellen der Vielzahl von LiDAR-Datensätzen an ein entferntes Rechengerät, auf dem die wahrscheinlichste Zustandsfolge für das Objekt ermittelt wird.

6. Das computerimplementierte Verfahren nach Anspruch l, wobei jeder Geschwindigkeitswert der Vielzahl von Geschwindigkeitswerten eine Funktion von (i) einer Mittelpunktskoordinate für den amodalen Quader an einer gegebenen Position ist, die Datenpunkte eines ersten LiDAR-Datensatzes der Vielzahl von LiDAR-Datensätzen umfasst, der zu einem gegebenen Zeitpunkt erfasst wurde, (ii) einer Mittelpunktskoordinate des amodalen Quaders an der gegebenen Position, die Datenpunkte eines zweiten LiDAR-Datensatzes der Vielzahl von LiDAR-Datensätzen umfasst, der unmittelbar darauffolgend erfasst wurde, und (iii) einer LiDAR-Bildrate.

7. Das computerimplementierte Verfahren nach Anspruch l, wobei jeder Beschleunigungswert der Vielzahl von Beschleunigungswerten eine Funktion von (i) einer Geschwindigkeit des Objekts ist, die unter Verwendung eines Mittelpunkts der Koordinate des amodalen Quaders an einer gegebenen Position berechnet wird und Datenpunkte eines ersten LiDAR-Datensatzes der Vielzahl von LiDAR-Datensätzen umfasst, der zu einem gegebenen Zeitpunkt erfasst wurde, (ii) einer Geschwindigkeit des Objekts unter Verwendung eines Mittelpunkts der Koordinate des amodalen Quaders an der gegebenen Position und unter Einbeziehung von Datenpunkten eines zweiten LiDAR-Datensatzes der Vielzahl von LiDAR-Datensätzen, der zu einem unmittelbar darauf folgenden Zeitpunkt erfasst wurde, und (iii) einer LiDAR-Bildrate.

8. Das computergestützte Verfahren nach Anspruch 1, wobei jeder Einzelbild-Score-Wert der Vielzahl von Einzelbild-Score-Werten durch eine mathematische Gleichung definiert ist $SF {S}_{t} = \left|{w}_{j}{L}_{EPC 1 t}\right| + \left|{w}_{k}{L}_{CPC 1 t}\right| ,$ wobei: ***SFSₜ*** einen Einzelbildwert darstellt, der dem amodalen Quader zugeordnet ist, der sich an einer bestimmten Position in einem gegebenen 3D-Graphen befindet, um einen bestimmten LiDAR-Datensatz aus der Vielzahl der zum Zeitpunkt ***t*** erfassten LiDAR-Datensätze zu umfassen; ***wⱼ*** und ***wₖ*** Gewichte darstellen; ***L_{EPC1t}*** die euklidischen Abstände der LiDAR-Datenpunkte zu einer Kante des amodalen Quaders an der gegebenen Position innerhalb des gegebenen 3D-Graphen darstellen; und ***L_{CPC1t}*** die euklidischen Abstände der LiDAR-Datenpunkte zu einem Mittelpunkt des amodalen Quaders an der gegebenen Position innerhalb des gegebenen 3D-Graphen darstellt.

9. Das computergestützte Verfahren nach Anspruch 1, wobei jeder Wert der Vielzahl von Werten durch eine mathematische Gleichung definiert ist ${S}_{t} = Max \left\{compatible state_\left\{t-1\right\}\right\} \left(\begin{matrix}S \left(state_\left\{t-1\right\}\right) + {w}_{m} SF {S}_{t + 1} + \\ {w}_{n} {\left|ν\left[t+1\right]\right|}^{2} + {w}_{o} {\left|a\left[t\right]\right|}^{2}\end{matrix}\right)$ wobei: ***Sₜ*** einen Score darstellt, der einem ersten LiDAR-Datensatz der LiDAR-Datensätze zugeordnet ist, der zu einem bestimmten Zeitpunkt erfasst wurde und Datenpunkte enthält, die von dem amodalen Quader an einer bestimmten Position innerhalb eines gegebenen 3D-Graphen umschlossen werden; Max{compatible state_{***t-1***}} einen Maximalwert über alle Zustände zum Zeitpunkt ***t-1*** darstellt; ***S***(state_{***t-1***}) einen für einen Zustand zum Zeitpunkt ***t-1*** berechneten Score darstellt; ***wₘ**, **wₙ*** und ***wₒ*** Gewichte darstellen; ***SFSₜ₊₁*** einen Einzelbild-Score darstellt, der zuvor für den amodalen Quader berechnet wurde, der einen zweiten LiDAR-Datensatz der LiDAR-Datensätze umfasst, der unmittelbar darauf erfasst wurde; |***v*** [ ***t+1*** ]| die L2-Norm der Geschwindigkeitswerte darstellt, die zuvor für den zweiten LiDAR-Datensatz berechnet wurden; und |***a*** [ ***t*** ]| die L2-Norm der zuvor für den ersten LiDAR-Datensatz berechneten Beschleunigungswerte darstellt.

10. Ein System, umfassend Mittel zur Durchführung von Schritten eines der oben genannten Verfahren.

11. Ein Computerprogramm oder ein Speichermedium, das das Computerprogramm enthält, das Anweisungen umfasst, die, wenn sie von einem Prozessor ausgeführt werden, den Prozessor veranlassen, die Schritte eines der oben genannten Verfahrensansprüche durchzuführen.

12. Ein System, umfassend:
ein LiDAR-System, das so konfiguriert ist, dass es eine Vielzahl von LiDAR-Datensätzen erzeugt, die den Abstand eines autonomen Fahrzeugs zu einem Objekt zu mehreren verschiedenen Zeitpunkten messen;
ein Prozessor, der so konfiguriert ist, dass er die Vielzahl der LiDAR-Datensätze erfassen kann; und
ein nichtflüchtiges, computerlesbares Speichermedium, das Programmieranweisungen enthält, die so konfiguriert sind, dass sie den Prozessor veranlassen, ein Verfahren zur Steuerung eines autonomen Fahrzeugs gemäß einem der Ansprüche 1 bis 9 zu implementieren.

## Revendications

1. Procédé informatisé de commande d'un véhicule autonome, comprenant :
(a) effectuer des opérations par le véhicule autonome pour générer une pluralité d'ensembles de données LiDAR qui mesurent une distance entre le véhicule autonome et un objet à plusieurs moments différents ;
(b) en traçant chacun des ensembles de données LiDAR sur un graphique 3D ;
(c) définir un cuboïde amodal sur le graphique 3D qui englobe tous les points de données LiDAR dans un ensemble de données LiDAR respectif, dans lequel le cuboïde amodal est une boîte délimitée orientée en 3D qui représente un cap de l'objet et l'étendue complète de l'objet ;
(d) sélectionner arbitrairement une pluralité de positions différentes pour le cuboïde amodal dans le graphique 3D, dans lequel le cuboïde amodal aux différentes positions englobe toujours tous les points de données LiDAR dans un ensemble de données LiDAR respectif ;
(e) déterminer les coordonnées d'un point central du cuboïde amodal aux différentes positions dans le graphique 3D ;
(f) en utilisant les coordonnées du point central pour calculer une pluralité de valeurs de vitesse et une pluralité de valeurs d'accélération pour l'objet à chacun des différents moments ;
(g) en utilisant les coordonnées du point central pour calculer une pluralité de valeurs de score d'image unique qui sont chacune une fonction de (i) les distances euclidiennes pondérées de chaque point LiDAR à un bord du cuboïde amodal dans une position donnée dans le graphique 3D, et (ii) les distances euclidiennes pondérées au point central du cuboïde amodal dans la position donnée dans le graphique 3D ;
h) calculer une pluralité de scores pour les différentes positions cuboïdes dans le graphique 3D en fonction des valeurs de vitesse, des valeurs d'accélération et des valeurs de score d'une seule image ;
(i) utiliser la pluralité des scores comme entrées d'un algorithme de Viterbi pour déterminer une séquence d'états la plus probable pour l'objet étant donné les ensembles de données LiDAR ; et
(j) utiliser la séquence d'états la plus probable pour l'objet par le véhicule autonome afin de faciliter au moins une opération de conduite autonome.

2. Procédé mis en œuvre par ordinateur selon la revendication 1, dans lequel l'objet est un véhicule.

3. Le procédé mis en œuvre par ordinateur selon la revendication 1, dans lequel au moins une opération de conduite autonome comprend le suivi du mouvement d'un objet, la prédiction de la trajectoire d'un objet, la planification du mouvement du véhicule et l'évitement des collisions.

4. Procédé mis en œuvre par ordinateur selon la revendication 1, dans lequel les ensembles de données LiDAR sont traités par un dispositif informatique embarqué du véhicule autonome pour déterminer la séquence d'états la plus probable pour l'objet.

5. Le procédé mis en œuvre par ordinateur selon la revendication 1, comprenant en outre la fourniture de la pluralité d'ensembles de données LiDAR à un dispositif informatique distant où la séquence d'états la plus probable de l'objet est déterminée.

6. Procédé mis en œuvre par ordinateur selon la revendication 1, dans lequel chaque valeur de vitesse de la pluralité de valeurs de vitesse est une fonction de (i) une coordonnée du point central du cuboïde amodal dans une position donnée tout en englobant les points de données d'un premier ensemble de données LiDAR de la pluralité d'ensembles de données LiDAR acquis à un instant donné, (ii) une coordonnée du point central du cuboïde amodal dans la position donnée tout en englobant les points de données d'un deuxième ensemble de données LiDAR de la pluralité d'ensembles de données LiDAR acquis à un instant immédiatement ultérieur, et (iii) une fréquence d'images LiDAR.

7. Procédé mis en œuvre par ordinateur selon la revendication 1, dans lequel chaque valeur d'accélération de la pluralité de valeurs d'accélération est une fonction de (i) une vitesse de l'objet calculée à l'aide d'une coordonnée de point central pour le cuboïde amodal dans une position donnée tout en englobant les points de données d'un premier ensemble de données LiDAR de la pluralité d'ensembles de données LiDAR acquis à un instant donné, (ii) une vitesse de l'objet utilisant une coordonnée de point central pour le cuboïde amodal dans la position donnée tout en englobant les points de données d'un deuxième ensemble de données LiDAR de la pluralité d'ensembles de données LiDAR acquis à un instant immédiatement ultérieur, et (iii) une fréquence d'images LiDAR.

8. Procédé informatisé selon la revendication 1, dans lequel chaque valeur de score d'image unique parmi la pluralité de valeurs de score d'image unique est définie par une équation mathématique $SF {S}_{t} = \left|{w}_{j}{L}_{EPC 1 t}\right| + \left|{w}_{k}{L}_{CPC 1 t}\right| ,$ où : ***SFSₜ*** représente un score d'image unique associé au cuboïde amodal qui se trouve à une position donnée dans un graphe 3D donné, de manière à englober un ensemble de données LiDAR donné parmi la pluralité d'ensembles de données LiDAR acquis à l'instant ***t***; ***wⱼ*** et ***wₖ*** représentent des poids; ***L_{EPC1t}*** représente les distances euclidiennes des points de données LiDAR à un bord du cuboïde amodal dans la position donnée au sein du graphique 3D donné ; et ***L_{CPC1t}*** représente les distances euclidiennes des points de données LiDAR à un point central du cuboïde amodal dans la position donnée au sein du graphique 3D donné.

9. Procédé informatisé selon la revendication 1, dans lequel chaque score parmi la pluralité de scores est défini par une équation mathématique ${S}_{t} = Max \left\{compatible state_\left\{t-1\right\}\right\} \left(\begin{matrix}S \left(state_\left\{t-1\right\}\right) + {w}_{m} SF {S}_{t + 1} + \\ {w}_{n} {\left|ν\left[t+1\right]\right|}^{2} + {w}_{o} {\left|a\left[t\right]\right|}^{2}\end{matrix}\right)$ où : ***Sₜ*** représente un score associé à un premier jeu de données LiDAR parmi les jeux de données LiDAR acquis à un instant donné et dont les points de données sont inclus dans le cuboïde amodal ayant une position donnée dans un graphe 3D donné ; Max{compatible state_{***t-1***}} représente la valeur maximale parmi tous les états à l'instant ***t-1***; ***S***(state_{***t-1*** }) représente un score calculé pour un état à l' instant ***t-1*** ; ***wₘ**, **wₙ*** et ***wₒ*** représentent des pondérations ; ***SFSₜ₊₁*** représente un score d'image unique précédemment calculé pour le cuboïde amodal englobant un deuxième jeu de données LiDAR parmi la pluralité de jeux de données LiDAR acquis immédiatement après ; |***v***[***t+1***]| représente la norme L2 des valeurs de vitesse précédemment calculées pour le deuxième jeu de données LiDAR ; et |***a***[***t***]| représente la norme L2 des valeurs d'accélération précédemment calculées pour le premier jeu de données LiDAR.

10. Un système comprenant des moyens pour réaliser les étapes de l'une quelconque des revendications de méthode ci-dessus.

11. Un programme informatique, ou un support de stockage contenant le programme informatique, comprenant des instructions qui, lorsqu'elles sont exécutées par un processeur, amèneront le processeur à effectuer les étapes de l'une quelconque des revendications de méthode ci-dessus.

12. Un système comprenant :
un système LiDAR configuré pour générer une pluralité d'ensembles de données LiDAR qui mesurent la distance entre un véhicule autonome et un objet à plusieurs moments différents ;
un processeur configuré pour obtenir la pluralité d'ensembles de données LiDAR ; et
un support de stockage non transitoire lisible par ordinateur comprenant des instructions de programmation configurées pour amener le processeur à mettre en œuvre une méthode de contrôle d'un véhicule autonome selon l'une des revendications 1 à 9.
